# EUROPEAN PATENT APPLICATION

(11) **EP 3 962 151 A1**
(43) Date of publication of application: **02.03.2022**
(21) Application number: 20806424.6
(22) Date of filing: 09.05.2020
(51) Int. Cl.: H04W 24/08, H04W 24/10

(54) **COMMUNICATION METHOD AND COMMUNICATION APPARATUS**

(30) Priority: 15.05.2019 CN 201910403813
(71) Applicant: Huawei Technologies Co., Ltd., Longgang Shenzhen, Guangdong 518129 (CN)
(72) Inventor: WANG, Rui, Shenzhen, Guangdong 518129 (CN); LECOMPTE, David, Shenzhen, Guangdong 518129 (CN); DAI, Mingzeng, Shenzhen, Guangdong 518129 (CN)
(74) Representative: Thun, Clemens
(86) International application number: PCT/CN2020/089351
(87) International publication number: WO 2020/228630

(57) **Abstract**

A communication method and a communication apparatus are provided. The method includes: receiving, by a terminal device, measurement configuration information from a network device, where the measurement configuration information indicates at least one measurement area, and each measurement area is associated with at least one to-be-measured target; and measuring, by the terminal device in an idle state or a third state, the to-be-measured target based on a camped cell and the measurement configuration information. The terminal device can measure, in the idle state or the third state, the to-be-measured target that needs to be measured, to avoid a resource waste caused by measuring all to-be-measured targets.

## Description

This application claims priority to Chinese Patent Application No. 201910403813.8, filed with the China National Intellectual Property Administration on May 15, 2019 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A terminal device may simultaneously communicate with a plurality of network devices by using a dual connectivity (dual connectivity, DC) technology. In other words, according to the DC technology, different network devices can simultaneously provide a data transmission service for one terminal device.

In a DC scenario, after the terminal device accesses a network, the network configures a measurement task for the terminal device, and the terminal device measures a signal of a to-be-measured secondary cell based on the measurement task, stores a measurement result, and reports the measurement result to the network. The network may select a proper secondary cell for the terminal device based on the measurement result reported by the terminal device, and configure the selected secondary cell for the terminal device. It takes time to perform measurement after the terminal device accesses the network (that is, the terminal device enters a connected state). Therefore, an early measurement mechanism is introduced. The early measurement mechanism may be understood as that early measurement is configured for the terminal device when the network releases the terminal device to an idle state, so that the terminal device measures, in the idle state, a signal of a to-be-measured secondary cell based on an early measurement configuration, and stores an obtained measurement result. When the terminal device enters the connected state, the terminal device may report the stored measurement result to the network, and the measurement result is used by the network to evaluate the secondary cell that can be configured for the terminal device. For example, the network may learn of cells that have good signal quality from a perspective of the terminal device, to configure a secondary cell for the terminal device.

Generally, a measurement area in the early measurement configuration is associated with all to-be-measured targets, that is, to-be-measured targets that can be measured by the terminal device are unified. However, when the terminal device does not need to measure some to-be-measured targets, measuring all to-be-measured frequencies causes an unnecessary resource waste.

### SUMMARY

This application provides a communication method and a communication apparatus. A terminal device may measure, in an idle state or a third state, a to-be-measured target that needs to be measured, to avoid a resource waste caused by measuring all to-be-measured targets.

According to a first aspect, a communication method is provided. The method includes: A terminal device receives measurement configuration information from a network device, where the measurement configuration information indicates at least one measurement area, and each measurement area is associated with at least one to-be-measured target; and the terminal device measures, in an idle state or a third state, the to-be-measured target based on a camped cell and the measurement configuration information.

The measurement configuration information is used to indicate that the terminal device measures the to-be-measured target when the terminal device is in the idle state or the third state. The measurement area may be a set including one or more cells on one or more frequencies. The measurement area is used to indicate that when the camped cell belongs to the measurement area, the terminal device measures the at least one to-be-measured target associated with the measurement area.

It should be understood that there are a plurality of implementations of the at least one to-be-measured target configured by the network device for the terminal device. This is not specifically limited in this application. For example, the at least one to-be-measured target may be at least one to-be-measured frequency, and the terminal device may measure all cells on the at least one to-be-measured frequency based on the at least one to-be-measured frequency. For another example, the at least one to-be-measured target may be at least one list of to-be-measured cells on the at least one to-be-measured frequency. The list of to-be-measured cells may include one or more to-be-measured cells. The terminal device may measure, based on the at least one list of to-be-measured cells, the one or more to-be-measured cells included in the at least one list of to-be-measured cells.

With reference to the first aspect, in a possible implementation, the measurement configuration information includes at least two measurement areas, and each measurement area is associated with one or more to-be-measured targets.

It should be understood that the terminal device receives the at least two measurement areas configured by the network device, and the terminal device may determine, based on a current camped cell, one or more measurement areas to which the camped cell belongs. The terminal device measures at least one to-be-measured target associated with the one or more measurement areas to which the camped cell belongs, and does not measure at least one to-be-measured target associated with one or more measurement areas to which the camped cell does not belong.

In the foregoing technical solution, when the terminal device does not need to measure some to-be-measured targets, the some to-be-measured targets may not be measured, so that a resource waste caused by measuring all to-be-measured targets can be avoided.

With reference to the first aspect, in another possible implementation, the to-be-measured target includes one or more to-be-measured frequencies.

With reference to the first aspect, in another possible implementation, each to-be-measured target includes one to-be-measured frequency.

With reference to the first aspect, in another possible implementation, the to-be-measured frequency is an LTE frequency or an NR frequency.

With reference to the first aspect, in another possible implementation, the to-be-measured target includes one or more to-be-measured cells on one or more to-be-measured frequencies.

It may also be understood that each to-be-measured target includes a list of to-be-measured cells on the one or more to-be-measured frequencies, and the list of to-be-measured cells may include the one or more to-be-measured cells.

With reference to the first aspect, in another possible implementation, when the camped cell of the terminal device belongs to one or more measurement areas, the terminal device measures at least one to-be-measured target associated with the one or more measurement areas.

With reference to the first aspect, in another possible implementation, when the camped cell of the terminal device does not belong to one or more measurement areas, the terminal device measures, based on the measurement configuration information, at least one to-be-measured target associated with a measurement area other than the one or more measurement areas.

With reference to the first aspect, in another possible implementation, each measurement area includes a long term evolution LTE cell and a new radio NR cell.

In other words, each measurement area includes both the long term evolution LTE cell and the new radio NR cell. The measurement area indicates that when the camped cell of the terminal device belongs to the measurement area, the measurement configuration information is retained, and the at least one to-be-measured target associated with the measurement area is measured based on the measurement configuration information.

In the foregoing technical solution, each measurement area includes the LTE cell and the NR cell. The network device can configure that each measurement area includes the LTE cell and the NR cell, so that the terminal device does not need to update the measurement configuration information when performing reselection between cells of different RATs, and the network device also does not need to reconfigure the measurement configuration information. Therefore, overheads are reduced.

According to a second aspect, a communication method is provided. The method includes: A network device sends measurement configuration information to a terminal device, where the measurement configuration information indicates at least one measurement area, and each measurement area is associated with at least one to-be-measured target.

It should be understood that the measurement configuration information sent by the network device to the terminal device is used to indicate that the terminal device measures the to-be-measured target when the terminal device is in an idle state or a third state.

It should be further understood that the measurement area is used to indicate that when a camped cell belongs to the measurement area, the terminal device measures the at least one to-be-measured target associated with the measurement area, where the to-be-measured target includes one or more to-be-measured frequencies, and is used to indicate that the terminal device measures a cell on the one or more to-be-measured frequencies.

With reference to the second aspect, in a possible implementation, the measurement configuration information includes at least two measurement areas, and each measurement area is associated with one or more to-be-measured targets.

With reference to the second aspect, in another possible implementation, the to-be-measured target includes the one or more to-be-measured frequencies.

With reference to the second aspect, in another possible implementation, the to-be-measured frequency is an LTE frequency or an NR frequency.

With reference to the second aspect, in another possible implementation, the to-be-measured target includes one or more to-be-measured cells on the one or more to-be-measured frequencies.

With reference to the second aspect, in another possible implementation, each measurement area includes a long term evolution LTE cell and a new radio NR cell.

In other words, the measurement area includes the LTE cell and the NR cell. The measurement area indicates that when the camped cell of the terminal device belongs to the measurement area, the measurement configuration information is retained, and the at least one to-be-measured target associated with the measurement area is measured based on the measurement configuration information.

For specific details and beneficial effects of the implementations provided in the second aspect, refer to the foregoing descriptions of the implementations of the first aspect. Details are not described in the second aspect.

According to a third aspect, a communication method is provided. The method includes: A terminal device receives measurement configuration information from a network device, where the measurement configuration information includes at least one to-be-measured target; the terminal device receives at least one piece of indication information from the network device, where the at least one piece of indication information is separately used to indicate whether to measure the at least one to-be-measured target when the terminal device camps on a camped cell; and the terminal device measures, in an idle state or a third state, the to-be-measured target based on the camped cell, the measurement configuration information, and the indication information.

It should be noted that the indication information may be included in the measurement configuration information, or may be included in information or a message that is other than the measurement configuration information and that is sent by another network device to the terminal device, or the indication information and the measurement configuration information may be included in a same message sent by the network device to the terminal device. This is not limited in this application.

With reference to the third aspect, in a possible implementation, the terminal device receives the measurement configuration information sent by the network device, where the measurement configuration information includes the at least one to-be-measured target and indication information associated with the to-be-measured target, and the indication information is used to indicate whether to measure the to-be-measured target when the terminal device camps on the camped cell.

With reference to the third aspect, in another possible implementation, the indication information is used to indicate whether to measure the to-be-measured target when the terminal device camps on a long term evolution LTE cell, and indicate whether to measure the to-be-measured target when the terminal device camps on a new radio NR cell.

With reference to the third aspect, in another possible implementation, the to-be-measured target includes one or more to-be-measured frequencies.

With reference to the third aspect, in another possible implementation, each to-be-measured target includes one to-be-measured frequency.

With reference to the third aspect, in another possible implementation, the to-be-measured frequency is an LTE frequency or an NR frequency.

With reference to the third aspect, in another possible implementation, the to-be-measured target includes one or more to-be-measured cells on the one or more to-be-measured frequencies.

In other words, each to-be-measured target includes a list of to-be-measured cells on the one or more to-be-measured frequencies, and the list of to-be-measured cells may include the one or more to-be-measured cells.

With reference to the third aspect, in another possible implementation, the measurement configuration information includes first to-be-measured target configuration information and second to-be-measured target configuration information, where the first to-be-measured target configuration information includes at least one first to-be-measured target, the second to-be-measured target configuration information includes at least one second to-be-measured target, the first to-be-measured target includes only the LTE frequency, and the second to-be-measured target includes only the NR frequency.

With reference to the third aspect, in another possible implementation, the measurement configuration information includes a first to-be-measured target and a second to-be-measured target, where the first to-be-measured target includes only the LTE frequency, and the second to-be-measured target includes only the NR frequency.

With reference to the third aspect, in another possible implementation, the measurement configuration information includes a first to-be-measured target and a second to-be-measured target, where the first to-be-measured target includes only the LTE frequency, and the second to-be-measured target includes only the NR frequency. When the camped cell is the long term evolution LTE cell, the terminal device determines, based on indication information associated with the first to-be-measured target, to measure the first measurement target in the LTE cell; and determines, based on indication information associated with a second measurement target, to measure the second measurement target in the LTE cell. When the camped cell is the new radio NR cell, the terminal device determines, based on indication information associated with the first to-be-measured target, to measure the first measurement target in the NR cell; and determines, based on indication information associated with a second measurement target, to measure the second measurement target in the NR cell.

With reference to the third aspect, in another possible implementation, the measurement configuration information includes a first to-be-measured target and a second to-be-measured target, where the first to-be-measured target includes the LTE frequency and/or the NR frequency, and the second to-be-measured target includes the LTE frequency and/or the NR frequency. When the camped cell is the long term evolution LTE cell, the terminal device determines, based on the indication information associated with the first measurement target, to measure the first measurement target in the LTE cell. When the camped cell is the new radio NR cell, the terminal device determines, based on the indication information associated with the second measurement target, to measure the second measurement target in the NR cell.

According to a fourth aspect, a communication method is provided. The method includes: A network device sends measurement configuration information to a terminal device, where the measurement configuration information includes at least one to-be-measured target; and the network device sends at least one piece of indication information to the terminal device, where the at least one piece of indication information is separately used to indicate whether to measure the at least one to-be-measured target when the terminal device camps on a camped cell.

With reference to the fourth aspect, in another possible implementation, the network device sends the measurement configuration information to the terminal device, where the measurement configuration information includes the at least one to-be-measured target and indication information associated with the to-be-measured target, and the indication information is used to indicate whether to measure the to-be-measured target when the terminal device camps on the camped cell.

With reference to the fourth aspect, in another possible implementation, the to-be-measured target includes one or more to-be-measured frequencies.

With reference to the fourth aspect, in another possible implementation, the to-be-measured frequency is an LTE frequency or an NR frequency.

With reference to the fourth aspect, in another possible implementation, the to-be-measured target includes one or more to-be-measured cells on the one or more to-be-measured frequencies.

For specific details and beneficial effects of the implementations provided in the fourth aspect, refer to the foregoing descriptions of the implementations of the third aspect. Details are not described in the fourth aspect.

According to a fifth aspect, a communication apparatus is provided. The communication apparatus includes: a transceiver unit, configured to receive measurement configuration information sent by a network device, where the measurement configuration information indicates at least one measurement area, and each measurement area is associated with at least one to-be-measured target; and a processing unit, configured to measure, in an idle state or a third state, the to-be-measured target based on a camped cell and the measurement configuration information.

It may be understood that the communication apparatus in the fifth aspect may be a terminal device, or may be a component (for example, a chip or a circuit) that can be used for the terminal device.

With reference to the fifth aspect, in a possible implementation, the measurement configuration information includes at least two measurement areas, and each measurement area is associated with one or more to-be-measured targets.

With reference to the fifth aspect, in another possible implementation, the to-be-measured target includes one or more to-be-measured frequencies.

With reference to the fifth aspect, in another possible implementation, each to-be-measured target includes one to-be-measured frequency.

With reference to the fifth aspect, in another possible implementation, the to-be-measured frequency is an LTE frequency or an NR frequency.

With reference to the fifth aspect, in another possible implementation, the to-be-measured target includes one or more to-be-measured cells on one or more to-be-measured frequencies.

It may also be understood that each to-be-measured target includes a list of to-be-measured cells on the one or more to-be-measured frequencies, and the list of to-be-measured cells may include the one or more to-be-measured cells.

With reference to the fifth aspect, in another possible implementation, the processing unit is specifically configured to: when the camped cell of the terminal device belongs to one or more measurement areas, measure, by the terminal device, at least one to-be-measured target associated with the one or more measurement areas.

With reference to the fifth aspect, in another possible implementation, the processing unit is specifically configured to: when the camped cell of the terminal device does not belong to one or more measurement areas, measure, based on the measurement configuration information, at least one to-be-measured target associated with a measurement area other than the one or more measurement areas.

With reference to the fifth aspect, in another possible implementation, each measurement area includes a long term evolution LTE cell and a new radio NR cell.

In other words, each measurement area includes both the long term evolution LTE cell and the new radio NR cell. The measurement area indicates that when the camped cell belongs to the measurement area, the measurement configuration information is retained, and the at least one to-be-measured target associated with the measurement area is measured based on the measurement configuration information.

According to a sixth aspect, a communication apparatus is provided. The communication apparatus includes: a transceiver unit, configured to send measurement configuration information to a terminal device, where the measurement configuration information indicates at least one measurement area, and each measurement area is associated with at least one to-be-measured target.

It may be understood that the communication apparatus in the sixth aspect may be a network device, or may be a component (for example, a chip or a circuit) that can be used for the network device. The network device may be a base station.

It should be understood that the measurement configuration information is used to indicate that the terminal device measures the to-be-measured target when the terminal device is in an idle state or a third state.

It should be further understood that the measurement area is used to indicate that when a camped cell belongs to the measurement area, the terminal device measures the at least one to-be-measured target associated with the measurement area, where the to-be-measured target includes one or more to-be-measured frequencies, and is used to indicate that the terminal device measures a cell on the one or more to-be-measured frequencies.

With reference to the sixth aspect, in a possible implementation, the measurement configuration information includes at least two measurement areas, and each measurement area is associated with one or more to-be-measured targets.

With reference to the sixth aspect, in another possible implementation, the to-be-measured target includes the one or more to-be-measured frequencies.

With reference to the sixth aspect, in another possible implementation, the to-be-measured frequency is an LTE frequency or an NR frequency.

With reference to the sixth aspect, in another possible implementation, the to-be-measured target includes one or more to-be-measured cells on the one or more to-be-measured frequencies.

With reference to the sixth aspect, in another possible implementation, each measurement area includes a long term evolution LTE cell and a new radio NR cell.

In other words, the measurement area includes the long term evolution LTE cell and the new radio NR cell. The measurement area indicates that when the camped cell of the terminal device belongs to the measurement area, the measurement configuration information is retained, and the at least one to-be-measured target associated with the measurement area is measured based on the measurement configuration information.

According to a seventh aspect, a communication apparatus is provided. The communication apparatus includes: a transceiver unit, configured to receive measurement configuration information, where the measurement configuration information includes at least one to-be-measured target. The transceiver unit is further configured to: receive at least one piece of indication information from a network device, where the at least one piece of indication information is separately used to indicate whether to measure the at least one to-be-measured target when a terminal device camps on a camped cell; and measure, in an idle state or a third state, the to-be-measured target based on the camped cell, the measurement configuration information, and the indication information.

It may be understood that the communication apparatus in the seventh aspect may be the terminal device, or may be a component (for example, a chip or a circuit) that can be used for the terminal device.

It should be noted that the indication information may be included in the measurement configuration information, or may be included in information or a message that is other than the measurement configuration information and that is sent by another network device to the terminal device, or the indication information and the measurement configuration information may be included in a same message sent by the network device to the terminal device. This is not limited in this application.

With reference to the seventh aspect, in a possible implementation, the transceiver unit is configured to receive the measurement configuration information sent by the network device, where the measurement configuration information includes the at least one to-be-measured target and indication information associated with the to-be-measured target, and the indication information is used to indicate whether to measure the to-be-measured target when the terminal device camps on the camped cell.

With reference to the seventh aspect, in another possible implementation, the indication information is used to indicate whether to measure the to-be-measured target when the terminal device camps on a long term evolution LTE cell, and indicate whether to measure the to-be-measured target when the terminal device camps on a new radio NR cell.

With reference to the seventh aspect, in another possible implementation, the to-be-measured target includes one or more to-be-measured frequencies.

With reference to the seventh aspect, in another possible implementation, each to-be-measured target includes one to-be-measured frequency.

With reference to the seventh aspect, in another possible implementation, the to-be-measured frequency is an LTE frequency or an NR frequency.

With reference to the seventh aspect, in another possible implementation, the to-be-measured target includes one or more to-be-measured cells on the one or more to-be-measured frequencies.

In other words, each to-be-measured target includes a list of to-be-measured cells on the one or more to-be-measured frequencies, and the list of to-be-measured cells may include the one or more to-be-measured cells.

With reference to the seventh aspect, in another possible implementation, the measurement configuration information includes a first to-be-measured target and a second to-be-measured target, where the first to-be-measured target includes only the LTE frequency, and the second to-be-measured target includes only the NR frequency.

The processing unit is specifically configured to: when the camped cell is the long term evolution LTE cell, determine, based on indication information associated with the first to-be-measured target, to measure the first measurement target in the LTE cell; and determine, based on indication information associated with a second measurement target, to measure the second measurement target in the LTE cell; or when the camped cell is the new radio NR cell, determine, based on indication information associated with the first to-be-measured target, to measure the first measurement target in the NR cell; and determine, based on indication information associated with a second measurement target, to measure the second measurement target in the NR cell.

With reference to the seventh aspect, in another possible implementation, the measurement configuration information includes a first to-be-measured target and a second to-be-measured target, where the first to-be-measured target includes the LTE frequency and/or the NR frequency, and the second to-be-measured target includes the LTE frequency and/or the NR frequency.

The processing unit is specifically configured to: when the camped cell is the long term evolution LTE cell, determine, based on indication information associated with the first to-be-measured target, to measure the first measurement target in the LTE cell; when the camped cell is the new radio NR cell, determine, based on indication information associated with a second measurement target, to measure the second measurement target in the NR cell.

According to an eighth aspect, a communication apparatus is provided. The communication apparatus includes: a transceiver unit, configured to send measurement configuration information to a terminal device, where the measurement configuration information includes at least one to-be-measured target. The transceiver unit is further configured to send at least one piece of indication information to the terminal device, where the at least one piece of indication information is separately used to indicate whether to measure the at least one to-be-measured target when the terminal device camps on a camped cell.

It may be understood that the communication apparatus in the eighth aspect may be a network device, or may be a component (for example, a chip or a circuit) that can be used for the network device. The network device may be a base station.

With reference to the eighth aspect, in a possible implementation, the transceiver unit is configured to send the measurement configuration information to the terminal device, where the measurement configuration information includes the at least one to-be-measured target and indication information associated with the to-be-measured target, and the indication information is used to indicate whether to measure the to-be-measured target when the terminal device camps on the camped cell.

With reference to the eighth aspect, in another possible implementation, the to-be-measured target includes one or more to-be-measured frequencies.

With reference to the eighth aspect, in another possible implementation, the to-be-measured frequency is an LTE frequency or an NR frequency.

With reference to the eighth aspect, in another possible implementation, the to-be-measured target includes one or more to-be-measured cells on the one or more to-be-measured frequencies.

According to a ninth aspect, a communication apparatus is provided. The communication apparatus includes a processor. The processor is coupled to a memory, and may be configured to execute instructions in the memory, to implement the method according to any one of the first aspect to the fourth aspect and the possible implementations of the first aspect to the fourth aspect. Optionally, the communication apparatus further includes the memory. Optionally, the communication apparatus further includes an interface circuit, and the processor is coupled to the interface circuit.

Optionally, the interface circuit may be a transceiver, or an input/output interface.

Optionally, the transceiver may be a transceiver circuit. Optionally, the input/output interface may be an input/output circuit.

According to a tenth aspect, a processor is provided. The processor includes an input circuit, an output circuit, and a processing circuit. The processing circuit is configured to: receive a signal through the input circuit, and transmit a signal through the output circuit, to enable the processor to perform the method according to any one of the first aspect to the fourth aspect and the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in the embodiments of this application.

According to an eleventh aspect, a processing apparatus is provided. The apparatus includes a processor and a memory. The processor is configured to read instructions stored in the memory, receive a signal through a receiver, and transmit a signal through a transmitter, to perform the method according to any one of the first aspect to the fourth aspect and the possible implementations of the first aspect to the fourth aspect.

Optionally, there are one or more processors, and there are one or more memories.

Optionally, the memory may be integrated into the processor, or the memory and the processor are separately disposed.

In a specific implementation process, the memory may be a non-transitory (non-transitory) memory, such as a read-only memory (read-only memory, ROM). The memory and the processor may be integrated into one chip, or may be disposed in different chips. A type of the memory and a manner in which the memory and the processor are disposed are not limited in the embodiments of this application.

It should be understood that a related data exchange process, for example, sending a first message, may be a process of outputting the first message from the processor, and receiving information may be a process of receiving the information by the processor. Specifically, data output by the processor may be output to the transmitter, and input data received by the processor may be from the receiver. The transmitter and the receiver may be collectively referred to as a transceiver.

The processing apparatus according to the eleventh aspect may be a chip. The processor may be implemented by using hardware or software. When the processor is implemented by using hardware, the processor may be a logic circuit, an integrated circuit, or the like; or when the processor is implemented by using software, the processor may be a general-purpose processor, and is implemented by reading software code stored in the memory. The memory may be integrated into the processor, or may exist independently outside the processor.

According to a twelfth aspect, a computer-readable storage medium is provided. The computer-readable storage medium includes a computer program. When the computer program is run on a terminal device, the communication apparatus is enabled to perform the method according to any one of the first aspect to the fourth aspect and the implementations of the first aspect to the fourth aspect.

According to a thirteenth aspect, a computer-readable medium is provided. The computer-readable medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a fourteenth aspect, a communication system is provided. The communication system includes a network device and a terminal device.

### BRIEF DESCRIPTION OF DRAWINGS

FIG. 1 is a schematic diagram of a scenario of a communication system 100 applicable to this application;
FIG. 2 is another schematic diagram of a communication system 200 applicable to this application;
FIG. 3 is a schematic diagram of a DC architecture applicable to this application;
FIG. 4 is another schematic diagram of a DC architecture applicable to this application;
FIG. 5 is another schematic diagram of a DC architecture applicable to this application;
FIG. 6 is another schematic diagram of a DC architecture applicable to this application;
FIG. 7 is a schematic diagram of a dual connectivity network architecture according to an embodiment of this application;
FIG. 8 is a schematic flowchart of a communication method according to an embodiment of this application;
FIG. 9 is another schematic flowchart of a communication method according to an embodiment of this application;
FIG. 10 is a schematic diagram of an EN-DC network architecture according to an embodiment of this application;
FIG. 11 is another schematic flowchart of a communication method according to an embodiment of this application;
FIG. 12 is a schematic block diagram of a communication apparatus 1200 according to an embodiment of this application;
FIG. 13 is a schematic block diagram of a communication apparatus 1300 according to an embodiment of this application; and
FIG. 14 is a schematic diagram of a structure of a communication apparatus 1400 according to this application.

### DESCRIPTION OF EMBODIMENTS

The following describes technical solutions of this application with reference to accompanying drawings.

It should be understood that the technical solutions in the embodiments of this application may be applied to various communication systems, for example, a 4th generation (4th generation, 4G) mobile communication system such as a long term evolution (long term evolution, LTE) system, a 5th generation (5th generation, 5G) mobile communication system such as a new radio (new radio, NR) system, or a new communication system such as another next generation (next generation, NG) communication system. This is not limited in this application. A type of a terminal device is not specifically limited in the embodiments of this application. For example, the terminal device may be user equipment (user equipment, terminal device 230), an access terminal, a subscriber unit, a subscriber station, a mobile station , a remote station, a remote terminal, a mobile device, a user terminal, a wireless network device, a user agent, a user apparatus, or the like. The terminal may include but is not limited to a mobile station (mobile station, MS), a mobile phone (mobile telephone), user equipment (user equipment, terminal device 230), a handset (handset), portable equipment (portable equipment), a cellular phone, a cordless phone, a session initiation protocol (session initiation protocol, SIP) phone, a wireless local loop (wireless local loop, WLL) station, a personal digital assistant (personal digital assistant, PDA), a radio frequency identification (radio frequency identification, RFID) terminal device used for logistics, a handheld device or a computing device that has a wireless communication function, another device connected to a wireless modem, a vehicle-mounted device, a wearable device, a terminal device in the internet of things or the internet of vehicles, a terminal device in a 5G network, a terminal device in a future evolved public land mobile network (public land mobile network, PLMN) network, or the like.

By way of example and not limitation, the terminal device in the embodiments of this application may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn by a user or integrated into clothes or an accessory of a user. The wearable device is not only a hardware device, but is used to implement a powerful function through software support, a data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

A type of a network device is not specifically limited in this embodiment of this application, and may be any device configured to communicate with the terminal device. For example, the network device may be a base station device in an LTE system, that is, an evolved NodeB (evolved NodeB, eNB/eNodeB), an access network side device in an NR system, such as a gNB, a transmission point (transmission point, TRP), or a radio controller in a cloud radio access network (cloud radio access network, CRAN) scenario. Alternatively, the network device may be, for example, a relay station, an access point, a vehicle-mounted device, a wearable device, a network device in another next-generation network, or a network device in a future evolved PLMN network.

In a possible manner, the network device may include a centralized unit (centralized unit, CU) and a distributed unit (distributed unit, DU). One CU may be connected to one DU, or a plurality of DUs may share one CU, to reduce costs and facilitate network expansion. The CU and the DU may be divided based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed on the CU, and remaining protocol layers such as a radio link control (radio link control, RLC) layer, a medium access control (media access control, MAC) layer, and a physical layer are deployed on the DU.

Moreover, in the embodiments of this application, the network device serves a cell, and the terminal device communicates with the network device by using a transmission resource (for example, a frequency domain resource or a spectrum resource) used in the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have small coverage and low transmit power, and are applicable to providing a high-rate data transmission service.

A method provided in the embodiments of this application may be applied to the terminal device or the network device. The terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, text processing software, and instant messaging software. In addition, in the embodiments of this application, a specific structure of a body for performing a signal transmission method is not specially limited in the embodiments of this application, provided that the body can run a program recording code of the signal transmission method in the embodiments of this application to perform communication according to the signal transmission method in the embodiments of this application. For example, a wireless communication method in the embodiments of this application may be performed by a terminal device or a network device, or a function module that can invoke a program and execute the program and that is in the terminal device or the network device.

In addition, aspects or features in the embodiments of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

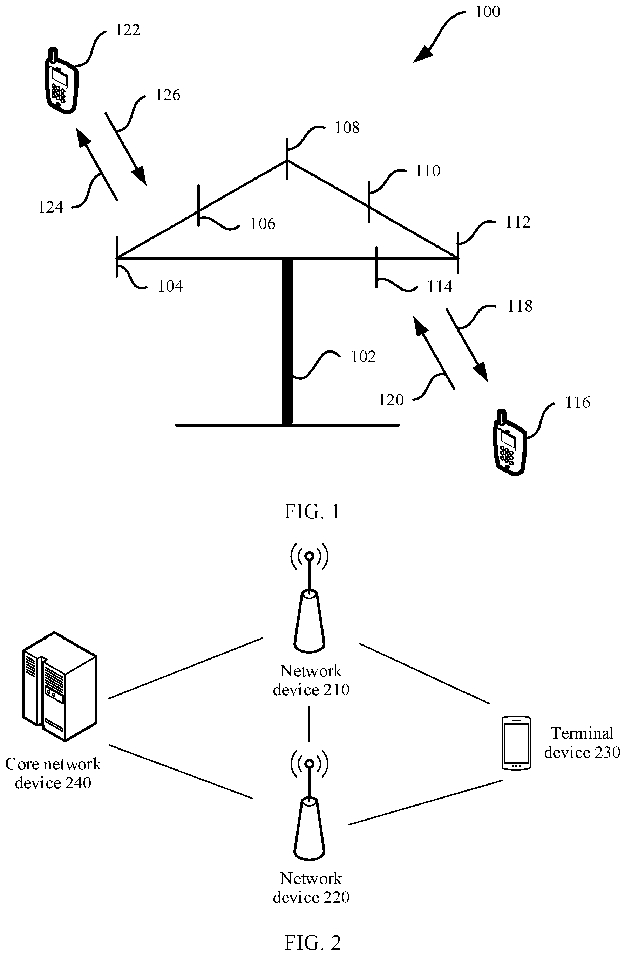

FIG. 1 is a schematic diagram of a scenario of a communication system 100. As shown in FIG. 1, the communication system 100 includes a network device 102, and the network device 102 may include a plurality of antenna groups. Each antenna group may include a plurality of antennas. For example, one antenna group may include antennas 104 and 106, another antenna group may include antennas 106 and 110, and an additional group may include antennas 112 and 114. FIG. 1 shows two antennas for each antenna group, but each group may include more or fewer antennas. The network device 102 may additionally include a transmitter chain and a receiver chain. A person of ordinary skill in the art may understand that both of the transmitter chain and the receiver chain may include a plurality of components (for example, a processor, a modulator, a multiplexer, a demodulator, a demultiplexer, and an antenna) related to signal sending and receiving.

The network device 102 may communicate with a plurality of terminal devices (such as a terminal device 116 and a terminal device 122). However, it may be understood that the network device 102 may communicate with any quantity of terminal devices that are similar to the terminal device 116 or 122. The terminal devices 116 and 122 each may be, for example, a cellular phone, a smartphone, a portable computer, a handheld communication device, a handheld computing device, a satellite radio apparatus, a global positioning system and/or any other proper device configured to perform communication in the wireless communication system 100.

As shown in FIG. 1, the terminal device 116 communicates with the antennas 112 and 114. The antennas 112 and 114 send information to the terminal device 116 through a forward link 116, and receive information from the terminal device 116 through a reverse link 120. In addition, the terminal device 122 communicates with the antennas 104 and 106. The antennas 104 and 106 send information to the terminal device 122 through a forward link 124, and receive information from the terminal device 122 through a reverse link 126.

In a given time, the network device 102, the terminal device 116, or the terminal device 122 may be a wireless communication sending apparatus and/or a wireless communication receiving apparatus. During data sending, the wireless communication sending apparatus may encode data for transmission. Specifically, the wireless communication sending apparatus may obtain (for example, generate, receive from another communication apparatus, or store in a memory) a specific quantity of data bits to be sent to the wireless communication receiving apparatus through a channel. The data bit may be included in a transport block (or a plurality of transport blocks) of the data, and the transport block may be segmented to generate a plurality of code blocks.

In addition, the communication system 100 may be a public land mobile network PLMN network, a device-to-device (device-to-device, D2D) network, a machine-to-machine (machine-to-machine, M2M) network, or another network. FIG. 1 is merely an example of a simplified schematic diagram for ease of understanding, and the network may further include another network device that is not shown in FIG. 1.

FIG. 2 is a schematic diagram of a communication system 200 applicable to this application. As shown in FIG. 2, the communication system 200 may include at least two network devices, for example, a network device 210 and a network device 220, and the communication system 200 may further include at least one terminal device, for example, a terminal device 230. In addition, the communication system 200 may further include at least one core network device, for example, a core network device 240. It should be understood that FIG. 2 is only a schematic diagram. The communication system may further include other network devices, for example, a wireless relay device and a wireless backhaul device. In addition, quantities of network devices and terminal devices included in the communication system are not limited in the embodiments of this application.

In FIG. 2, the terminal device 230 may be connected to the network device 210 and the network device 220 through an air interface, the network device 210 and the network device 220 may be connected in a wired or wireless manner, and the network device 210 and the network device 220 may be connected to the core network device 240 in a wired manner. The core network device 240 may be a 4G core network device, or may be a 5G core network device. The network device 210 may be an LTE base station or an NR base station, and the network device 220 may be an LTE base station or an NR base station. The terminal device 230 may communicate with the network device 210 and the network device 220 by using a dual connectivity (dual connectivity, DC) technology.

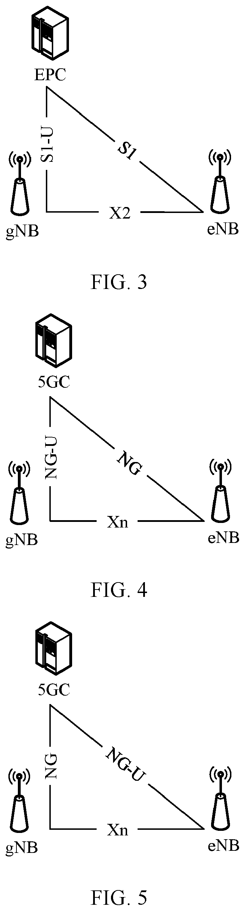

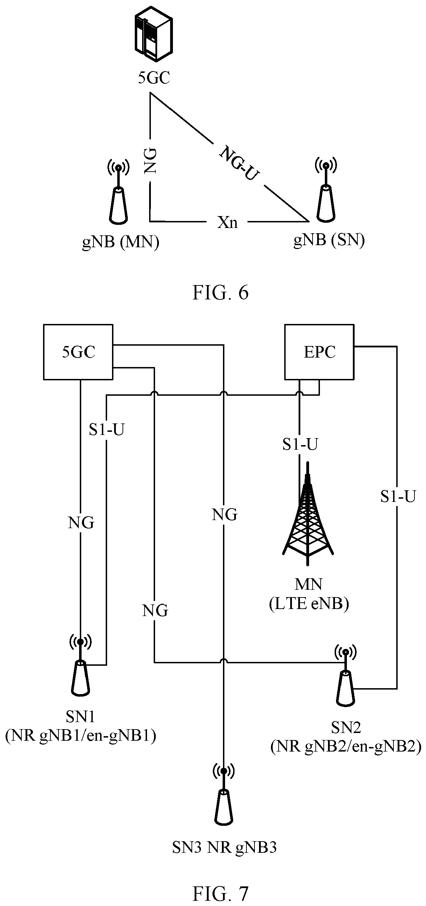

It should be understood that, according to the DC technology, two different network devices (for example, the network device 210 and the network device 220) can simultaneously provide a data transmission service for the terminal device 230. One network device may be referred to as a master base station or a master node (master node, MN), and the other network device is referred to as a secondary base station or a secondary node (secondary node, SN). The master base station may be a master base station (master gNB, MgNB) in an NR standard or a master base station (master SgNB) in an LTE standard. The secondary base station may be a secondary base station (secondary gNB, SgNB) in the NR standard or a secondary base station (secondary SgNB) in the LTE standard. There are a plurality of combinations of DCs. The following separately describes a plurality of possible combinations of DCs by using examples with reference to FIG. 3 to FIG. 6.
(1) When the core network device 240 is a packet core network (evolved packet core, EPC), an LTE base station serves as an MN, and an NR base station serves as an SN. The DC may also be referred to as an EN-DC (E-UTRA NR DC). Referring to FIG. 3, in this case, the LTE base station may be connected to the NR base station through an X2 interface. At least a control plane connection is included, and a user plane connection may be further included. The LTE base station may be connected to the EPC through an S1 interface. At least a control plane connection is included, and a user plane connection may be further included. The NR base station may be connected to the EPC through an S1-U interface, that is, only a user plane connection may be included. In this case, the LTE base station may provide an air interface resource for the terminal device 230 by using at least one LTE cell. In this case, the at least one LTE cell is referred to as a master cell group (master cell group, MCG). Correspondingly, the NR base station may alternatively provide an air interface resource for the terminal device 230 by using at least one NR cell. In this case, the at least one NR cell is referred to as a secondary cell group (secondary cell group, SCG).
(2) When the core network device 240 is a 5G core network (5G core, 5GC), an LTE base station serves as an MN, and an NR base station serves as an SN. The DC may also be referred to as an NE-DC (NR E-UTRA DC). Referring to FIG. 4, in this case, the LTE base station may be connected to the NR base station through an Xn interface. At least a control plane connection is included, and a user plane connection may be further included. The LTE base station may be connected to the 5GC through an NG interface. At least a control plane connection is included, and a user plane connection may be further included. The NR base station may be connected to the 5GC through an NG-U interface, that is, only a user plane connection may be included. In this case, the LTE base station may provide an air interface resource for the terminal device 230 by using at least one LTE cell. In this case, the at least one LTE cell is referred to as an MCG. Correspondingly, the NR base station may alternatively provide an air interface resource for the terminal device 230 by using at least one NR cell. In this case, the at least one NR cell is referred to as an SCG.
(3) When the core network device 240 is a 5GC, an NR base station serves as an MN, and an LTE base station serves as an SN. The DC may also be referred to as an NG EN-DC (next generation E-UTRA NR DC). Referring to FIG. 5, in this case, the NR base station may be connected to the LTE base station through an Xn interface. At least a control plane connection is included, and a user plane connection may be further included. The NR base station may be connected to the 5GC through an NG interface. At least a control plane connection is included, and a user plane connection may be further included. An NG-U interface exists between the LTE base station and the 5GC, that is, only a user plane connection may be included. In this case, the NR base station may provide an air interface resource for the terminal device 230 by using at least one NR cell. In this case, the at least one NR cell is referred to as an MCG. Correspondingly, the LTE base station may alternatively provide an air interface resource for the terminal device 230 by using at least one LTE cell. In this case, the at least one LTE cell is referred to as an SCG.
   It should be understood that an NG eNB is an LTE eNB that can be connected to the 5GC. NG LTE may also be referred to as eLTE. This is not specifically limited in this embodiment of this application.
(4) When the core network device 240 is a 5GC, both an MN and an SN are NR base stations. The DC may also be referred to as an NR-NR DC. Referring to FIG. 6, both the master base station and the secondary base station are NR base stations, and the NR master base station may be connected to the NR secondary base station through an Xn interface. At least a control plane connection is included, and a user plane connection may be further included. An NG interface exists between the NR master base station and the 5GC. At least a control plane connection is included, and a user plane connection may be further included. An NG-U interface exists between the NR secondary base station and the 5GC, that is, only a user plane connection may be included. In this case, the NR master base station may provide an air interface resource for the terminal device 230 by using at least one NR cell. In this case, the at least one NR cell is referred to as an MCG. Correspondingly, the NR secondary base station may alternatively provide an air interface resource for the terminal device 230 by using at least one NR cell. In this case, the at least one NR cell is referred to as an SCG.

When the secondary base station is an NR base station, the NR base station may not support independent access. For example, when the NR base station does not support the independent access, the UE cannot camp on the cell, and the cell can only be used as an SCell of the UE. In this case, the NR cell is referred to as a non-standalone (non-standalone, NSA) cell. For another example, when the NR base station supports the independent access, the UE may camp on the cell and enter a connected state, that is, the cell may be a PCell of the UE. In this case, the NR cell may be referred to as a standalone (standalone, SA) cell.

It should be understood that in FIG. 3 to FIG. 6, an example in which the LTE base station is an eNB and the NR base station is a gNB is used for description. However, this shall not constitute any limitation on this application.

Generally, in a DC scenario, after the terminal device 230 accesses a network, the network configures a measurement task for the terminal device 230, and the terminal device 230 measures a signal of a to-be-measured secondary cell based on the measurement task, stores a measurement result, and reports the measurement result to the network. The network may select a proper secondary cell for the terminal device 230 based on the measurement result reported by the terminal device 230, and configure the selected secondary cell for the terminal device 230. It takes time to perform measurement after the terminal device 230 accesses the network (that is, in the connected state). Therefore, an idle state measurement mechanism (where the idle state measurement may also be referred to as early measurement) is introduced. The early measurement mechanism may be understood as that early measurement is configured for the terminal device 230 when the network releases the terminal device 230 to an idle state, so that the terminal device 230 measures, in the idle state, a signal of a to-be-measured secondary cell based on an early measurement configuration, and stores an obtained measurement result. When the terminal device 230 enters the connected state, the terminal device 230 may report the stored measurement result to the network, and the measurement result is used by the network to evaluate the secondary cell that can be configured for the terminal device 230. For example, the network may learn of cells that have good signal quality from a perspective of the terminal device 230, to configure a secondary cell for the terminal device 230.

Carrier aggregation (carrier aggregation, CA) is used as an example. Both the LTE base station and the NR base station support CA. In other words, the terminal device 230 may perform data transmission by using a plurality of component carriers (component carriers, CCs), to obtain a high bandwidth and a high rate. A cell accessed by the terminal device 230 is a primary cell (primary cell, PCell), and a component carrier on which the primary cell is located is a primary component carrier (primary component carrier, PCC). One or more secondary cells (secondary cells, SCells) are configured after access, and a component carrier on which the secondary cell is located is a secondary component carrier (secondary component carrier, SCC). When releasing the terminal device 230 to the idle state, the network delivers the early measurement configuration to the terminal device 230, so that the terminal device 230 measures the signal of the to-be-measured secondary cell when the terminal device 230 is in the idle state, and stores the obtained measurement result.

Specifically, for example, when a serving cell of the terminal device 230 belongs to the LTE base station, for example, when a DC that the network prepares to configure for the terminal device 230 is an EN-DC, the network may include a to-be-measured NR frequency and/or an NR cell on the to-be-measured NR frequency in the early measurement configuration. For another example, when the network prepares to configure a DC on an LTE side for the terminal device 230, the network may include a to-be-measured E-UTRA frequency and/or an LTE cell on the to-be-measured E-UTRA frequency in the early measurement configuration. Similarly, for another example, when a serving cell of the terminal device 230 belongs to the NR base station, for example, when the network prepares to configure an NR-NR DC for the terminal device 230, a to-be-measured frequency in the early measurement configuration may be a to-be-measured NR frequency and/or an NR cell on the to-be-measured NR frequency. For another example, when the network prepares to configure an NE-DC for the terminal device 230, a to-be-measured frequency in the early measurement may be a to-be-measured E-UTRA frequency and/or an LTE cell on the to-be-measured E-UTRA frequency.

In some embodiments, when the secondary base station is the NR base station, the NR cell may be an NSA cell, or may be an SA cell. For example, a network architecture shown in FIG. 7 includes one master base station and three secondary base stations. The master base station MN is connected to an EPC through an S1-U interface, an SN3 of the three secondary base stations supports only an EN-DC, and an SN1 is connected to a 5GC through an NG interface. The SN1 and an SN2 support both the EN-DC and independent access. The SN1 and the SN2 are connected to the EPC through the S1-U interface and are connected to the 5GC through the NG interface.

According to the technical solutions provided in the embodiments of this application, at least one measurement area may be configured, so that a terminal device measures, in an idle state or a third state, a to-be-measured target that needs to be measured, to avoid a resource waste caused by measuring all to-be-measured targets.

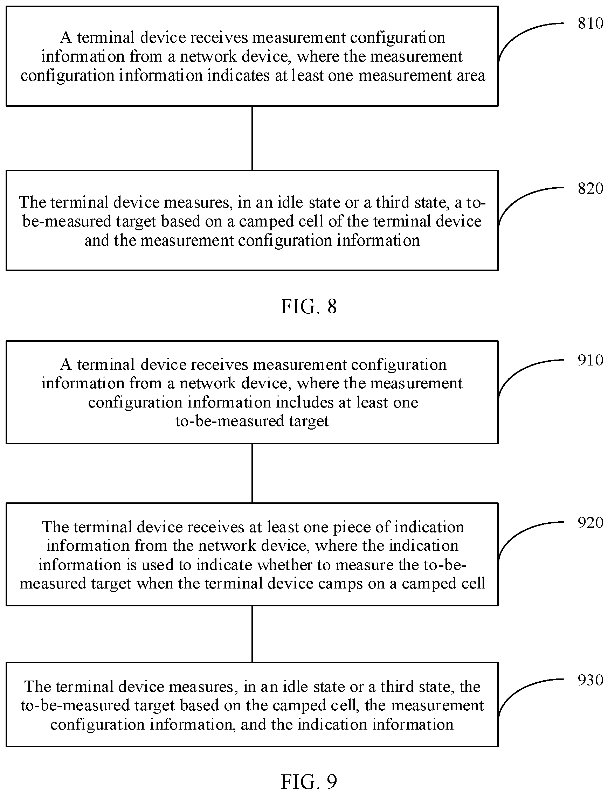

FIG. 8 is a schematic flowchart of a communication method according to an embodiment of this application. As shown in FIG. 8, the method may include steps 810 and 820. The following describes the steps 810 and 820 in detail.

Step 810: A terminal device receives measurement configuration information from a network device, where the measurement configuration information indicates at least one measurement area.

Optionally, before step 810, the terminal device 230 may access a network in a cell 1. It should be understood that the cell 1 may be an LTE cell, and the cell 1 may be an SA cell. This is not specifically limited in this embodiment of this application.

After the terminal device 230 accesses the network in the cell 1, an LTE master base station may send a radio resource control connection release (radio resource control connection release, RRC connection release) message to the terminal device 230. The RRC connection release message is used to indicate the terminal device 230 to enter an RRC idle state (RRC_IDLE) or an RRC inactive state (RRC_INACTIVE). The RRC idle state may also be referred to as an idle state, and the RRC inactive state may also be referred to as an inactive state or a third state.

Optionally, the RRC connection release message may carry configuration information of an effective timer of the measurement configuration information. For example, the configuration information of the effective timer may be duration of the effective timer. The configuration information of the effective timer is used to indicate that the terminal device 230 needs to perform measurement in the RRC_IDLE state or the RRC_INACTIVE state during running of the timer.

820: The terminal device measures, in the idle state or the third state, a to-be-measured target based on a camped cell of the terminal device and the measurement configuration information.

The terminal device may determine, in the idle state or the third state, whether the camped cell belongs to a measurement area indicated by the measurement configuration information. If the terminal device belongs to one or more measurement areas, the terminal device retains the measurement configuration information, and measures, based on the measurement configuration information, at least one to-be-measured target associated with the one or more measurement areas. If the terminal device determines that the camped cell does not belong to the one or more measurement areas, the terminal device retains the measurement configuration information, and measures, based on the measurement configuration information, at least one to-be-measured target associated with a measurement area other than the one or more measurement areas.

There are a plurality of specific implementations in which the network sends the measurement configuration information (which may also be referred to as an early measurement configuration) to the terminal device. This is not specifically limited in this embodiment of this application. For example, a master base station to which the cell 1 belongs includes the measurement configuration information in the RRC connection release message. For example, the master base station to which the cell 1 belongs includes both the configuration information of the effective timer and the measurement configuration information in the RRC connection release message sent to the terminal device 230. For another example, the LTE master base station may include the measurement configuration information in a broadcast system message.

An example in which the system message carries the measurement configuration information is used. The terminal device 230 receives the measurement configuration information in a cell 2, where the cell 2 and the cell 1 may be a same cell or different cells. This is not limited in this application. When the cell 2 and the cell 1 are different cells, it means that the terminal device 230 reselects to camp on the cell 2 when performing cell reselection in the RRC_IDLE state or the RRC_INACTIVE state, and receives, in the cell 2, the system message that carries the measurement configuration information, and the terminal device 230 stores the measurement configuration information and measures the to-be-measured target based on the measurement configuration information.

The measurement area is a set including cells on one or more frequencies. If the camped cell of the terminal device belongs to the cell set, the terminal device may measure the to-be-measured target associated with the measurement area. A scenario in which an LTE base station performs DC with an NR base station is used as an example. The measurement area may include an LTE cell on one or more frequencies and an NR cell on one or more frequencies.

An example in which the camped cell of the terminal device is an LTE cell is used. The terminal device determines whether the LTE cell on which the terminal device camps belongs to an LTE cell set that includes one or more frequencies. If the LTE cell belongs to the LTE cell set, the terminal device may measure the to-be-measured target associated with the measurement area. Similarly, an example in which the camped cell of the terminal device is an NR cell is used. The terminal device determines whether the NR cell on which the terminal device camps belongs to an NR cell set that includes one or more frequencies. If the NR cell belongs to the NR cell set, the terminal device may measure the to-be-measured target associated with the measurement area.

In this embodiment of this application, the measurement area is associated with the at least one to-be-measured target. The to-be-measured target may include one or more to-be-measured frequencies, or may include a list of to-be-measured cells on the one or more to-be-measured frequencies. The terminal device may measure a cell or a list of cells on the one or more to-be-measured frequencies.

It should be noted that the measurement area may also be referred to as a validity area (validity area). For ease of description, the following uses the validity area as an example for description.

In this embodiment of this application, the early measurement configuration may indicate one validity area, or may indicate a plurality of validity areas. The following separately provides examples for description.

In a possible implementation, an example in which the early measurement configuration indicates one validity area is used. The network configures one validity area for at least one to-be-measured frequency or a list of to-be-measured cells on the to-be-measured frequency, where the validity area includes a plurality of cells, for example, an LTE cell and an NR cell.

It should be understood that the list of to-be-measured cells may include one or more to-be-measured cells.

For example, one validity area (validity area) is configured for a to-be-measured NR frequency (and the list of to-be-measured cells). The validity area may include an LTE cell and an NR cell. When the terminal device 230 performs inter-RAT cell reselection, for example, when the terminal device 230 performs cell reselection from the LTE cell on which the terminal device 230 currently camps to the NR cell, because the NR cell reselected by the terminal device 230 belongs to the validity area, the terminal device 230 may continue to measure the to-be-measured NR frequency associated with the validity area.

For another example, one validity area (validity area) is configured for a to-be-measured E-UTRA frequency (and the list of to-be-measured cells), where the validity area may include an LTE cell and an NR cell. When the terminal device 230 performs inter-RAT cell reselection, for example, when the terminal device 230 performs cell reselection from the LTE cell on which the terminal device 230 currently camps to the NR cell, because the NR cell reselected by the terminal device 230 belongs to the validity area, the terminal device 230 may continue to measure the to-be-measured E-UTRA frequency associated with the validity area.

In the foregoing technical solution, the measurement area may be configured, so that when the terminal device performs reselection between cells of different radio access types (radio access types, RATs), the early measurement configuration does not need to be updated, and the network does not need to perform reconfiguration. Therefore, overheads are reduced.

In another possible implementation, an example in which the early measurement configuration indicates more than one validity area is used. The at least one to-be-measured target is associated with one validity area, where the at least one to-be-measured target may include at least one to-be-measured frequency, one to-be-measured frequency may further include one or more lists of to-be-measured cells, and each list of to-be-measured cells may include one or more to-be-measured cells.

There are a plurality of specific implementations in which the network determines the more than one validity area. This is not specifically limited in this embodiment of this application. For example, a master base station may associate one or more to-be-measured frequencies with one validity area by using a to-be-measured frequency set as a granularity. For another example, each to-be-measured frequency may have a plurality of lists of to-be-measured cells, and a master base station may associate each list of to-be-measured cells with one validity area by using the list of to-be-measured cells as a granularity.

For example, the network configures a plurality of validity areas. One validity area may include only an LTE cell, or may include only an NR cell, or may include both the NR cell and the LTE cell. The network associates each of the plurality of validity areas with a corresponding to-be-measured frequency, or a plurality of lists of to-be-measured cells included in each to-be-measured frequency.

By way of example and not limitation, a first validity area includes only the LTE cell, the associated to-be-measured frequency is a first frequency set, where the first frequency set may include one or more LTE frequencies and/or one or more NR frequencies. A second validity area includes only the NR cell, the associated to-be-measured frequency is a second frequency set, where the second frequency set may include one or more LTE frequencies and/or one or more NR frequencies. Similarly, the network may further configure a third validity area, where the third validity area includes the LTE cell and the NR cell, and is associated with a third frequency set. The third frequency set may include one or more LTE frequencies and/or one or more NR frequencies.

It should be noted that the network may further configure only one or more of the first validity area, the second validity area, and the third validity area. This is not limited in this application.

For another example, the network configures two validity areas. One validity area includes only the LTE cell, and the other validity area includes only the NR cell. The network associates the two validity areas with corresponding to-be-measured frequencies, or a plurality of lists of to-be-measured cells included in each to-be-measured frequency.

By way of example and not limitation, the first frequency set is associated with the first validity area, and the first frequency set may include one or more LTE frequencies and/or one or more NR frequencies. The second frequency set is associated with the second validity area, and the second frequency set may include one or more LTE frequencies and/or one or more NR frequencies. Similarly, the network may further configure the third frequency set, and associates the first validity area and the second validity area. The third frequency set may include one or more LTE frequencies and/or one or more NR frequencies.

It should be noted that the network may configure only one or both of the first validity area and the second validity area, or the network configures only one or more of the first frequency set, the second frequency set, and the third frequency set. This is not limited in this application.

FIG. 9 is another schematic flowchart of a communication method according to an embodiment of this application. As shown in FIG. 9, the method may include steps 910 to 930. The following separately describes the steps 910 to 930 in detail.

Step 910: A terminal device receives measurement configuration information from a network device, where the measurement configuration information includes at least one to-be-measured target.

Step 920: The terminal device receives at least one piece of indication information from the network device, where the indication information is used to indicate whether to measure the to-be-measured target when the terminal device camps on a camped cell.

The indication information may be included in the measurement configuration information, or may be included in information or a message that is other than the measurement configuration information and that is sent by another network device to the terminal device, or the indication information and the measurement configuration information may be included in a same message sent by the network device to the terminal device. This is not limited in this embodiment of this application.

It may be understood that step 910 and step 920 are not performed in a sequence. Step 910 may be performed first, and then step 920 is performed. Alternatively, step 920 may be performed first, and then step 910 is performed. Alternatively, step 910 and step 920 may be performed simultaneously.

Optionally, the measurement configuration information sent by the network device to the terminal device may include the at least one to-be-measured target and the at least one piece of indication information respectively associated with the at least one to-be-measured target.

It should be understood that the to-be-measured target may include at least one to-be-measured frequency, or at least one list of to-be-measured cells included in the to-be-measured frequency.

In a possible implementation, the measurement configuration information includes one or more to-be-measured targets. The to-be-measured target includes an LTE frequency list and/or an NR frequency list. Optionally, a frequency list further includes a specific measurement configuration of each frequency. Optionally, the measurement configuration information further carries explicit or implicit indication information, and is used to indicate whether the measurement configuration is used in a scenario when the terminal device camps on an NR cell or camps on an LTE cell.

It should be noted that the measurement configuration information in this embodiment of this application may also be referred to as an early measurement configuration.

By way of example and not limitation, in a possible manner, the early measurement configuration carries a first to-be-measured target configuration. Optionally, the early measurement configuration carries first indication information (an explicit or implicit indication), and is used to indicate that when camping on the LTE cell, the terminal device needs to perform measurement in an idle state or a third state based on the first to-be-measured target configuration. For example, the implicit indication may be specified in a related protocol. Optionally, the early measurement configuration further carries second indication information (an explicit or implicit indication), and is used to indicate that when camping on the NR cell, the terminal device also performs measurement based on the first to-be-measured target configuration. For example, when the terminal device receives the first to-be-measured target configuration, the first indication information, and the second indication information in the LTE cell, the first indication information is used to indicate that when camping on the LTE cell, the terminal device performs measurement in the idle state or the third state based on the first to-be-measured target configuration. The second indication information is used to indicate that when performing cell reselection to the NR cell, the terminal device inherits the to-be-measured target configuration, that is, when camping on the NR cell, the terminal device also performs measurement based on the first to-be-measured target configuration. Similarly, when the terminal device receives the first to-be-measured target configuration, the first indication information, and the second indication information in the NR cell, the second indication information is used to indicate that when camping on the NR cell, the terminal device performs measurement in the idle state or the third state based on the first to-be-measured target configuration. The first indication information is used to indicate that when performing reselection to the LTE cell, the terminal device inherits the first to-be-measured target configuration, that is, when camping on the LTE cell, the terminal device also performs measurement based on the first to-be-measured target configuration. It may be understood that the first indication information and the second indication information may be combined. For example, one bit is used to represent the first indication information or the second indication information, that is, "0" and "1" respectively represent the first indication information and the second indication information. Further, optionally, the early measurement configuration may further carry a second to-be-measured target configuration. The second to-be-measured target configuration may also carry specific explicit or implicit indication information, and is used to indicate whether the terminal device needs to perform measurement in the idle state or the third state based on the second to-be-measured target configuration when camping on the LTE cell/NR cell. A specific manner is similar to that of the first to-be-measured target configuration, and details are not described herein again.

By way of example and not limitation, in another possible manner, the early measurement configuration carries a first to-be-measured target configuration, where the first to-be-measured target configuration includes an LTE frequency and/or an NR frequency. Optionally, the early measurement configuration carries first indication information (an explicit or implicit indication), and is used to indicate that when camping on the LTE cell, the terminal device needs to perform measurement in an idle state or a third state based on the first to-be-measured target configuration. For example, the implicit indication may be preset. For example, when the terminal device receives the first to-be-measured target configuration and the first indication information in the LTE cell, the first indication information is used to indicate that when camping on the LTE cell, the terminal device performs measurement in the idle state or the third state based on the first to-be-measured target configuration. When the terminal device performs cell reselection to the NR cell, the terminal device retains and suspends the to-be-measured target configuration, that is, does not perform measurement. When the terminal device performs cell reselection to the LTE cell, the terminal device further inherits the to-be-measured target configuration, and then performs measurement based on the first to-be-measured target configuration. Similarly, when the terminal device receives the first to-be-measured target configuration and the first indication information in the NR cell, when the terminal device camps on the NR cell, the terminal device does not measure the first to-be-measured target, but retains and suspends the to-be-measured target configuration. The first indication information is used to indicate that when performing reselection to the LTE cell, the terminal device inherits the first to-be-measured target configuration, that is, when camping on the LTE cell, the terminal device performs measurement based on the first to-be-measured target configuration. Further, optionally, the early measurement configuration may further carry a second to-be-measured target configuration, and the second measurement target configuration includes the LTE frequency and/or the NR frequency. The second to-be-measured target configuration may also carry specific explicit or implicit indication information, and is used to indicate whether the terminal device needs to perform measurement in the idle state or the third state based on the second to-be-measured target configuration when camping on the NR cell. A specific manner is similar to that of the first to-be-measured target configuration, and details are not described herein again.

Step 930: The terminal device measures, in the idle state or the third state, the to-be-measured target based on the camped cell of the terminal device, the measurement configuration information, and the indication information.

In a possible implementation, a cell on which the terminal device camps is the NR cell. The terminal device may determine a to-be-measured target corresponding to the NR cell, and determine, based on indication information associated with the to-be-measured target, whether the camped cell of the terminal device measures the to-be-measured target.

In another possible implementation, a cell on which the terminal device camps is the NR cell. The terminal device may determine, based on the indication information, the to-be-measured target that needs to be measured when the terminal device camps on the NR cell.

In the foregoing technical solution, when performing inter-RAT cell reselection, the terminal device may directly measure the to-be-measured target based on the obtained early measurement configuration. The network does not need to re-perform early measurement configuration when the terminal device performs the inter-RAT cell reselection. Therefore, network resources are saved.

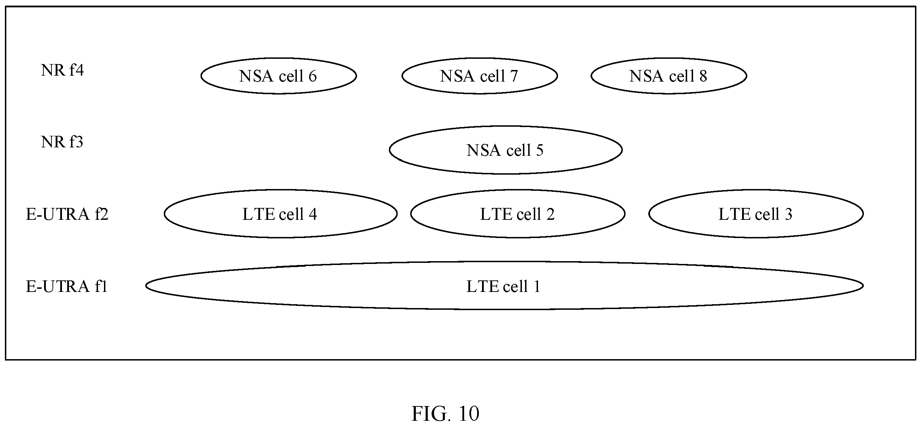

In some embodiments, when the NR cell is an NSA cell, the NR cell does not support camping and RRC connection of a terminal device 230. For example, in an EN-DC network architecture shown in FIG. 10, as shown in FIG. 10, an LTE cell and an NR NSA cell may be included. A base station to which the LTE cell belongs serves as a master base station, and a base station to which the NR NSA cell belongs serves as a secondary base station. Some LTE cells support DC, while others do not support DC. In other words, when the terminal device 230 camps on the LTE cell that supports DC, the terminal device 230 measures a to-be-measured NR frequency in a network early measurement configuration. When the terminal device 230 camps on the LTE cell that does not support DC, the terminal device 230 does not need to measure the to-be-measured NR frequency in the network early measurement configuration.

For example, referring to FIG. 10, four frequencies are included: an E-UTRA f1, an E-UTRAf2, an NR f3, and an NR f4. An LTE cell 1 is deployed on the E-UTRA f1 and supports EN-DC. An LTE cell 2, an LTE cell 3, and an LTE cell 4 are deployed on the E-UTRA f2. A cell 1, a cell 2, and a cell 4 support DC, and the LTE cell 3 does not support DC. Several NSA cells are deployed on the NR f3 and the NR f4. For example, an NSA cell 5 is deployed on the NR f3, and an NSA cell 2, an NSA cell 3, and an NSA cell 4 are deployed on the NR f4. In one case, if the terminal device 230 camps on the LTE cell 3, because the LTE cell 3 does not support DC, the terminal device 230 does not need to measure the to-be-measured NR frequency. In another case, because coverage of the NR f4 is larger than coverage of the NR f3, the terminal device 230 does not need to measure a to-be-measured NR f3 if not required. For example, the terminal device 230 measures the NR f4 when camping on the LTE cell 1, the LTE cell 2, and the LTE cell 4, and measures the NR f3 when camping on the LTE cell 1 and the LTE cell 2.

According to the technical solution provided in this embodiment of this application, when measurement does not need to be performed, the terminal device does not measure some to-be-measured frequencies, to avoid a resource waste caused by measuring all to-be-measured frequencies.

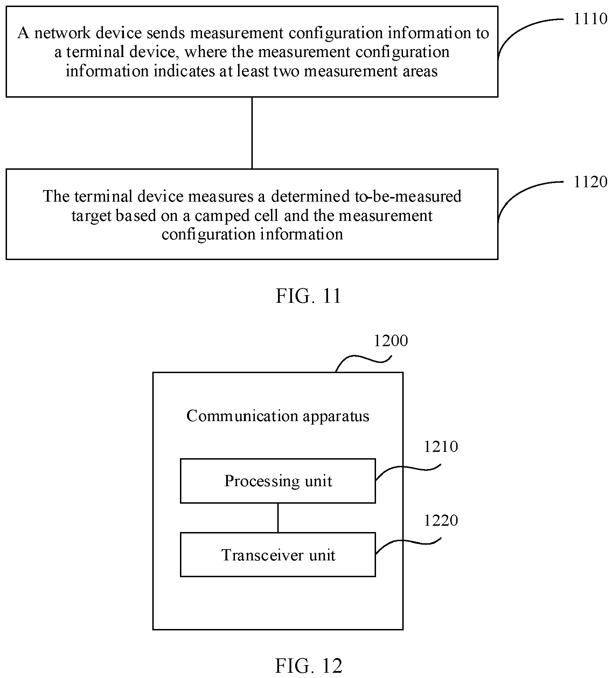

FIG. 11 is another schematic flowchart of a communication method according to an embodiment of this application. As shown in FIG. 11, the method may include steps 1110 and 1120. The following separately describes the steps 1110 and 1120 in detail.

Step 1110: A network device sends measurement configuration information to a terminal device, where the measurement configuration information indicates at least two measurement areas.

Optionally, before step 1110, the terminal device 230 may access a network in an LTE cell 1.

After the terminal device 230 accesses the network in the cell 1, an LTE master base station may send an RRC connection release message to the terminal device 230. The RRC connection release message is used to indicate the terminal device 230 to enter an RRC idle state (RRC_IDLE) or an RRC inactive state (RRC_INACTIVE).

Optionally, the RRC connection release message may carry configuration information of an effective timer of the measurement configuration information. For example, the configuration information of the effective timer may be duration of the effective timer. The configuration information of the effective timer is used to indicate that the terminal device 230 needs to perform measurement in the RRC_IDLE state or the RRC_INACTIVE state during running of the timer.

There are a plurality of specific implementations in which the network sends the measurement configuration information (which may also be referred to as an early measurement configuration) to the terminal device. For details, refer to the foregoing descriptions of sending the measurement configuration information. Details are not described herein again.

In this embodiment of this application, each of the at least two measurement areas is associated with at least one to-be-measured target. The to-be-measured target may include one or more to-be-measured frequencies, or may include a list of to-be-measured cells on the one or more to-be-measured frequencies. The terminal device may measure a cell or a list of cells on the one or more to-be-measured frequencies.

There are a plurality of specific implementations in which the network determines more than one validity area. This is not specifically limited in this embodiment of this application. For example, a master base station may associate one or more to-be-measured frequencies with one validity area by using a to-be-measured frequency set as a granularity. For another example, each to-be-measured frequency may have a plurality of lists of to-be-measured cells, and a master base station may associate each list of to-be-measured cells with one validity area by using the list of to-be-measured cells as a granularity. A specific implementation is similar to step 810. For details, refer to the descriptions in step 810. Details are not described herein again.

The LTE master base station may send early measurement configurations of at least two validity areas to the terminal device 230. After receiving the early measurement configurations, the terminal device 230 may determine whether a camped cell belongs to one or more validity areas. If the camped cell of the terminal device 230 belongs to one or more validity areas, the terminal device 230 may measure a to-be-measured target associated with the one or more validity areas.

FIG. 10 is used as an example. Referring to FIG. 10, when the terminal device 230 camps on the LTE cell 3, the LTE cell 3 does not support DC. Therefore, the terminal device 230 does not need to measure the NR f3 and the NR f4. The coverage of the NR f4 is larger than the coverage of the NR f3. The terminal device 230 measures the NR f4 when camping on the LTE cell 1, the LTE cell 2, and the LTE cell 4, and measures the NR f3 when camping on the LTE cell 1 and the LTE cell 2. The network may determine, for the at least one to-be-measured target, a cell on which measurement needs to be performed, and determine a set of these cells as one of the validity areas.

For example, each of the at least one to-be-measured target includes one to-be-measured frequency. When the terminal device 230 camps on the LTE cell 1, the to-be-measured frequencies are the NR f3 and the NR f4. When the terminal device 230 camps on the LTE cell 2, to-be-measured frequencies are the NR f3 and the NR f4. When the terminal device 230 camps on the LTE cell 3, no to-be-measured frequency is included. When the terminal device 230 camps on the LTE cell 4, the to-be-measured frequency is the NR f4. A validity area that is associated with the to-be-measured frequency NR f3 and that is determined by the LTE master base station includes the LTE cell 1 and the LTE cell 2. That is, for the to-be-measured frequency NR f3, a cell set that needs to be measured includes the LTE cell 1 and the LTE cell 2. A validity area that is associated with the to-be-measured frequency NR f4 and that is determined by the LTE master base station includes the LTE cell 1, the LTE cell 2, and the LTE cell 4. That is, for the to-be-measured frequency NR f4, a cell set that needs to be measured includes the LTE cell 1, the LTE cell 2, and the LTE cell 4.

Step 1120: The terminal device measures a determined to-be-measured target based on the camped cell and the measurement configuration information.

The terminal device may receive the measurement configuration information in the RRC connection release message, or may receive the measurement configuration information in a system message broadcast by the LTE master base station.

An example in which the system message broadcast by the LTE master base station carries the measurement configuration information is used. The terminal device 230 receives the measurement configuration information in the LTE cell 2, where the LTE cell 2 and the LTE cell 1 may be a same cell or different cells. This is not limited in this application. When the LTE cell 2 and the LTE cell 1 are different LTE cells, it means that when performing cell reselection in the RRC_IDLE state or the RRC_INACTIVE state, the terminal device 230 reselects to camp on the LTE cell 2, and receives, in the LTE cell 2, the system message that carries the measurement configuration information, and the terminal device 230 stores and applies the measurement configuration information.

At least one to-be-measured frequency may be at least one NR frequency or at least one E-UTRA frequency. This is not specifically limited in this embodiment of this application.

Specifically, the terminal device 230 may determine, based on a cell identity (identity, ID) of the LTE cell 1, whether the LTE cell belongs to one or more validity areas. When the LTE cell 1 on which the terminal device 230 currently camps does not belong to one or more validity areas, the terminal device 230 only stops measuring the to-be-measured target associated with the one or more validity areas. When the LTE cell 1 on which the terminal device 230 currently camps belongs to one or more validity areas, but measurement of the to-be-measured target associated with the one or more validity areas has been stopped, the terminal device 230 resumes the measurement of the to-be-measured target associated with the one or more validity areas.

For example, the measurement configuration information received by the terminal device 230 indicates two validity areas. A first validity area includes the LTE cell 1 and the LTE cell 2, and a to-be-measured frequency associated with the first validity area is the NR f3. A second validity area includes the LTE cell 1, the LTE cell 2, and the LTE cell 4, and a to-be-measured frequency associated with the second validity area is the NR f4. The terminal device 230 may determine, based on that a cell on which the terminal device currently camps is the cell 1, that the cell 1 belongs to the first validity area and the second validity area. The terminal device 230 separately measures signal quality of the to-be-measured frequency NR f3 and the to-be-measured frequency NR f4 based on the to-be-measured frequency associated with the first validity area and the to-be-measured frequency associated with the second validity area.

It should be noted that similarly, for other types of DC connections, such as NE-DC and NR NR-DC, a to-be-measured frequency signal that needs to be measured may be measured by using the foregoing method. For details, refer to the foregoing descriptions. Details are not described herein again.

In this embodiment of this application, the network may separately configure the validity area based on the one or more to-be-measured frequencies, so that when the terminal device does not need to perform measurement, the terminal device does not measure some to-be-measured frequencies. Therefore, a resource waste caused by measuring all to-be-measured frequencies can be avoided.

It may be understood that, in the communication method in the embodiments of this application, the steps implemented by the terminal device may alternatively be implemented by a component (for example, a chip or a circuit) that can be used for the terminal device. The steps implemented by the network device may alternatively be implemented by a component (for example, a chip or a circuit) that can be used for the network device.

The foregoing describes in detail the communication methods provided in the embodiments of this application with reference to FIG. 1 to FIG. 11. The following describes in detail apparatus embodiments of this application with reference to FIG. 12 to FIG. 14. It should be understood that the descriptions of the method embodiments correspond to the descriptions of the apparatus embodiments. Therefore, for a part that is not described in detail, refer to the foregoing method embodiments.

FIG. 12 is a schematic block diagram of a communication apparatus 1200 according to an embodiment of this application. As shown in FIG. 12, the communication apparatus 1200 may include a processing unit 1210 and a transceiver unit 1220.

In a possible design, the communication apparatus 1200 may correspond to the terminal device in the foregoing method embodiments. For example, the communication apparatus 1200 may be the terminal device, a chip configured in the terminal device, or a circuit configured in the terminal device. When the communication apparatus is the terminal device, the processing unit may be a processor, and the transceiver unit may be a transceiver. The communication apparatus may further include a storage unit, and the storage unit may be a memory. The storage unit is configured to store instructions, and the processing unit executes the instructions stored in the storage unit, to enable the communication apparatus to perform the foregoing method. When the communication apparatus is the chip in the terminal device, the processing unit may be a processor, and the transceiver unit may be an interface circuit, an input/output interface, a pin, a circuit, or the like. The processing unit executes instructions stored in a storage unit, to enable the communication apparatus to perform operations performed by the terminal device in the foregoing methods. The storage unit may be a storage unit (for example, a register or a cache) in the chip, or may be a storage unit (for example, a read-only memory, a random access memory) that is in the communication apparatus and that is located outside the chip.

In an implementation, units of the communication apparatus 1200 and the foregoing other operations and/or functions are used to implement corresponding procedures of the method in FIG. 8. Specifically, the transceiver unit 1220 is configured to receive measurement configuration information sent by a network device, where the measurement configuration information indicates at least one measurement area, and each measurement area is associated with at least one to-be-measured target. The processing unit 1210 is configured to measure, in an idle state or a third state, the to-be-measured target based on a camped cell and the measurement configuration information.

Optionally, the measurement configuration information includes at least two measurement areas, and each measurement area is associated with one or more to-be-measured targets.

Optionally, the to-be-measured target includes one or more to-be-measured frequencies.

Optionally, each to-be-measured target includes one to-be-measured frequency.

Optionally, the to-be-measured frequency is an LTE frequency or an NR frequency.

Optionally, the to-be-measured target includes one or more to-be-measured cells on the one or more to-be-measured frequencies.

Optionally, the processing unit 1210 is specifically configured to: when the camped cell of the terminal device belongs to one or more measurement areas, measure, at least one to-be-measured target associated with the one or more measurement areas.

Optionally, the processing unit 1210 is specifically configured to: when the camped cell of the terminal device does not belong to one or more measurement areas, measure, based on the measurement configuration information, at least one to-be-measured target associated with a measurement area other than the one or more measurement areas.

Optionally, each measurement area includes a long term evolution LTE cell and a new radio NR cell.

In an implementation, units of the communication apparatus 1200 and the foregoing other operations and/or functions are used to implement corresponding procedures of the method in FIG. 9. Details are as follows.

The transceiver unit 1220 is configured to receive measurement configuration information, where the measurement configuration information includes at least one to-be-measured target.

The transceiver unit 1220 is further configured to receive at least one piece of indication information from a network device, where the at least one piece of indication information is separately used to indicate whether to measure the at least one to-be-measured target when the terminal device camps on a camped cell.

The processing unit 1210 is configured to: measures, by the terminal device in an idle state or a third state, the to-be-measured target based on the camped cell, the measurement configuration information, and the indication information.

It should be noted that the indication information may be included in the measurement configuration information, or may be included in information or a message that is other than the measurement configuration information and that is sent by another network device to the terminal device, or the indication information and the measurement configuration information may be included in a same message sent by the network device to the terminal device. This is not limited in this application.

Optionally, the indication information is used to indicate whether to measure the to-be-measured target when the terminal device camps on a long term evolution LTE cell, and indicate whether to measure the to-be-measured target when the terminal device camps on a new radio NR cell.

Optionally, the transceiver unit 1220 is configured to receive the measurement configuration information sent by the network device, where the measurement configuration information includes the at least one to-be-measured target and indication information associated with the to-be-measured target, and the indication information is used to indicate whether to measure the to-be-measured target when the terminal device camps on the camped cell.

Optionally, the to-be-measured target includes one or more to-be-measured frequencies.

Optionally, each to-be-measured target includes one to-be-measured frequency.

Optionally, the to-be-measured frequency is an LTE frequency or an NR frequency.

Optionally, the to-be-measured target includes one or more to-be-measured cells on the one or more to-be-measured frequencies.

In other words, each to-be-measured target includes a list of to-be-measured cells on the one or more to-be-measured frequencies, and the list of to-be-measured cells may include the one or more to-be-measured cells.

Optionally, the measurement configuration information includes a first to-be-measured target and a second to-be-measured target, where the first to-be-measured target includes only the LTE frequency, and the second to-be-measured target includes only the NR frequency.

The processing unit 1210 is specifically configured to: when the camped cell is the long term evolution LTE cell, determine, based on indication information associated with the first to-be-measured target, to measure the first measurement target in the LTE cell; and determine, based on indication information associated with a second measurement target, to measure the second measurement target in the LTE cell; or when the camped cell is the new radio NR cell, determine, based on indication information associated with the first to-be-measured target, to measure the first measurement target in the NR cell; and determine, based on indication information associated with a second measurement target, to measure the second measurement target in the NR cell.

Optionally, the measurement configuration information includes a first to-be-measured target and a second to-be-measured target, the first to-be-measured target includes the LTE frequency and/or the NR frequency, and the second to-be-measured target includes the LTE frequency and/or the NR frequency.

The processing unit 1210 is specifically configured to: when the camped cell is the long term evolution LTE cell, determine, based on indication information associated with the first to-be-measured target, to measure the first measurement target in the LTE cell; when the camped cell is the new radio NR cell, determine, based on indication information associated with a second measurement target, to measure the second measurement target in the NR cell.

In another possible design, the communication apparatus 1200 may correspond to the network device in the foregoing method embodiments. For example, the communication apparatus 1200 may be the network device, a chip configured in the network device, or a circuit configured in the network device. When the communication apparatus is the network device, the processing unit may be a processor, and the transceiver unit may be a transceiver. The communication apparatus may further include a storage unit, and the storage unit may be a memory. The storage unit is configured to store instructions, and the processing unit executes the instructions stored in the storage unit, to enable the communication apparatus to perform the foregoing method. When the communication apparatus is the chip in the network device, the processing unit may be a processor, and the transceiver unit may be an interface circuit, an input/output interface, a pin, a circuit, or the like. The processing unit executes instructions stored in a storage unit, to enable the communication apparatus to perform operations performed by the network device in the foregoing methods. The storage unit may be a storage unit (for example, a register or a cache) in the chip, or may be a storage unit (for example, a read-only memory, a random access memory) that is in the communication apparatus and that is located outside the chip.

In an implementation, units of the communication apparatus 1200 and the foregoing other operations and/or functions are used to implement corresponding procedures of the method in FIG. 8. Specifically, the transceiver unit 1220 is configured to send measurement configuration information to a terminal device, where the measurement configuration information indicates at least one measurement area, and each measurement area is associated with at least one to-be-measured target.

It should be understood that the measurement configuration information is used to indicate that the terminal device measures the to-be-measured target when the terminal device is in an idle state or a third state.

It should be further understood that the measurement area is used to indicate that when a camped cell belongs to the measurement area, the terminal device measures the at least one to-be-measured target associated with the measurement area, where the to-be-measured target includes one or more to-be-measured frequencies, and is used to indicate that the terminal device measures a cell on the one or more to-be-measured frequencies.

Optionally, the measurement configuration information includes at least two measurement areas, and each measurement area is associated with one or more to-be-measured targets.

Optionally, the to-be-measured target includes the one or more to-be-measured frequencies.

Optionally, the to-be-measured frequency is an LTE frequency or an NR frequency.

Optionally, the to-be-measured target includes one or more to-be-measured cells on the one or more to-be-measured frequencies.

Optionally, each measurement area includes a long term evolution LTE cell and a new radio NR cell.

In other words, the measurement area includes the long term evolution LTE cell and the new radio NR cell. The measurement area indicates that when the camped cell of the terminal device belongs to the measurement area, the measurement configuration information is retained, and the at least one to-be-measured target associated with the measurement area is measured based on the measurement configuration information.

In an implementation, units of the communication apparatus 1200 and the foregoing other operations and/or functions are used to implement corresponding procedures of the method in FIG. 9. Details are as follows.

The transceiver unit 1220 is configured to send measurement configuration information to a terminal device, where the measurement configuration information includes at least one to-be-measured target.

The transceiver unit 1220 is further configured to send at least one piece of indication information to the terminal device, where the at least one piece of indication information is separately used to indicate whether to measure the at least one to-be-measured target when the terminal device camps on a camped cell.

Optionally, the to-be-measured target includes one or more to-be-measured frequencies.

Optionally, the transceiver unit 1220 is configured to send the measurement configuration information to the terminal device, where the measurement configuration information includes the at least one to-be-measured target and indication information associated with the to-be-measured target, and the indication information is used to indicate whether to measure the to-be-measured target when the terminal device camps on the camped cell.

Optionally, the to-be-measured frequency is an LTE frequency or an NR frequency.

Optionally, the to-be-measured target includes one or more to-be-measured cells on the one or more to-be-measured frequencies.

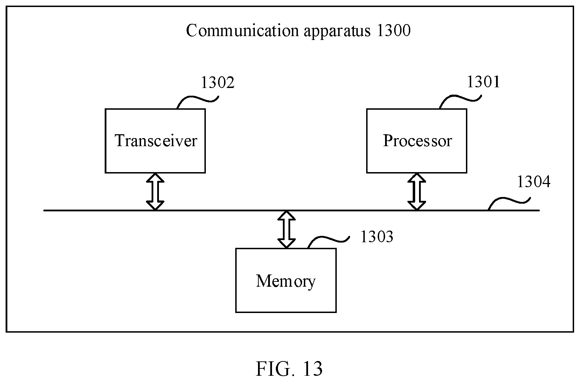

FIG. 13 is a schematic block diagram of a communication apparatus 1300 according to an embodiment of this application. The communication apparatus 1300 may be, for example, a terminal device. As shown in FIG. 13, a base station may be used in the communication system shown in FIG. 1, to perform functions of the terminal device in the foregoing method embodiments. The communication apparatus 1300 may include a processor 1301, a transceiver 1302, and a memory 1303.

The processor 1301 may be communicatively connected to the transceiver 1302. The memory 1303 may be configured to store program code and data of the communication apparatus 1300. Therefore, the memory 1303 may be a storage unit in the processor 1301, an external storage unit independent of the processor 1301, or a component including a storage unit in the processor 1301 and an external storage unit independent of the processor 1301.

Optionally, the communication apparatus 1300 may further include a bus 1304. The transceiver 1302 and the memory 1303 may be connected to the processor 1301 through the bus 1304. The bus 1304 may be a peripheral component interconnect (peripheral component interconnect, PCI) bus, an extended industry standard architecture (extended industry standard architecture, EISA) bus, or the like. The bus 1304 may be classified into an address bus, a data bus, a control bus, and the like. For ease of representation, only one thick line is used to represent the bus in FIG. 13, but this does not mean that there is only one bus or only one type of bus.

For example, the processor 1301 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor.

The transceiver 1302 may be a circuit including the foregoing antenna, a transmitter chain, and a receiver chain, and may be independent circuits or a same circuit.

It may be understood that, for functions and corresponding operations of the modules of the communication apparatus in this embodiment of this application, refer to related descriptions in the method embodiments. In addition, the module in this embodiment of this application may also be referred to as a unit, a circuit, or the like. This is not limited in this embodiment of this application.

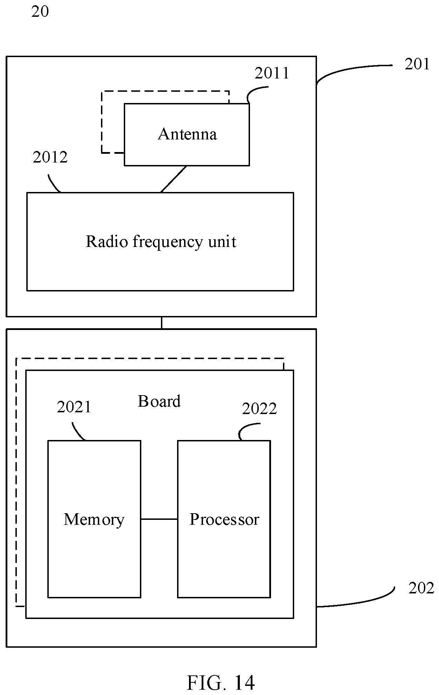

FIG. 14 is a schematic diagram of a structure of a communication apparatus 1400 according to this application. The communication apparatus 1400 may be, for example, a base station. As shown in FIG. 14, a base station may be used in the communication system shown in FIG. 1, to perform functions of the network device in the foregoing method embodiments. The base station 20 may include one or more radio frequency units, such as a remote radio unit (remote radio unit, RRU) 201 and one or more baseband units (baseband unit, BBU) (which may also be referred to as digital units (digital unit, DU)) 202. The RRU 201 may be referred to as a transceiver unit, a transceiver machine, a transceiver circuit, a transceiver, or the like, and may include at least one antenna 2011 and a radio frequency unit 2012. The RRU 201 part is mainly configured to perform receiving and sending of a radio frequency signal and conversion between a radio frequency signal and a baseband signal, for example, configured to send a BFR configuration in the foregoing method embodiments. The BBU 202 part is mainly configured to perform baseband processing, control the base station, and the like. The RRU 201 and the BBU 202 may be physically disposed together, or may be physically separated, that is, in a distributed base station.

The BBU 202 is a control center of the base station, may also be referred to as a processing unit, and is mainly configured to complete baseband processing functions such as channel coding, multiplexing, modulation, and spectrum spreading. For example, the BBU (the processing unit) 202 may be configured to control the base station to perform an operation procedure related to the network device in the method embodiments.

In an embodiment, the BBU 202 may include one or more boards. A plurality of boards may jointly support a radio access network (such as an LTE network) of a single access standard, or may separately support radio access networks (such as an LTE network, a 5G network, or another network) of different access standards. The BBU 202 further includes a memory 2021 and a processor 2022. The memory 2021 is configured to store necessary instructions and necessary data. The processor 2022 is configured to control the base station to perform a necessary action, for example, is configured to control the base station to perform an operation procedure related to the network device in the foregoing method embodiments. The memory 2021 and the processor 2022 may serve the one or more boards. In other words, a memory and a processor may be independently disposed on each board. Alternatively, a plurality of boards may share a same memory and a same processor. In addition, each board may further be provided with a necessary circuit.

In addition, the network device is not limited to the foregoing forms, and may also be in another form. For example, the network device includes a BBU and an adaptive radio unit (adaptive radio unit, ARU), or includes a BBU and an active antenna unit (active antenna unit, AAU), or may be customer premises equipment (customer premises equipment, CPE), or may be in another form. This is not limited in this application.

It should be noted that the processor in the embodiments of this application may be an integrated circuit chip, and has a signal processing capability. In an implementation process, the steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware and software units in a decoding processor. The software unit may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor.

It should be further understood that the memory in the embodiments of this application may be a volatile memory or a nonvolatile memory, or may include a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be understood that, for functions and corresponding operations of the modules of the communication apparatus in this embodiment of this application, refer to related descriptions in the method embodiments. In addition, the module in this embodiment of this application may also be referred to as a unit, a circuit, or the like. This is not limited in this embodiment of this application.

It may be understood that the terminal device or the network device may perform some or all of the steps in the foregoing embodiments. These steps or operations are merely examples. In this embodiment of this application, other operations or variations of various operations may be further performed. In addition, the steps may be performed in a sequence different from that presented in the foregoing embodiment, and not all operations in the foregoing embodiment may need to be performed.

An embodiment of this application further provides a computer-readable medium, configured to store a computer program. The computer program includes instructions used to perform the method in any possible implementation of any one of the foregoing aspects.

An embodiment of this application further provides a computer program product, used in a communication apparatus. The computer program product includes computer program code. When the computer program code is run by a computer, the computer is enabled to perform the method in any possible implementation of any one of the foregoing aspects.

An embodiment of this application further provides a chip system, used in a communication apparatus. The chip system includes: at least one processor, at least one memory, and an interface circuit. The interface circuit is responsible for information exchange between the chip system and an external environment. The at least one memory, the interface circuit, and the at least one processor are connected to each other through a line. The at least one memory stores instructions. The instructions are executed by the at least one processor, to perform operations of the network element in the methods in the foregoing aspects.

In addition, the terms "system" and "network" in this specification may be often used interchangeably in this specification. The term "and/or" in this specification describes only an association relationship for associated objects and indicates that three relationships may exist. For example, A and/or B may indicate the following three cases: Only A exists, both A and B exist, and only B exists. In addition, the character "/" in this specification usually indicates an "or" relationship between associated objects.

It should be understood that in the embodiments of this application, "B corresponding to A" indicates that B is associated with A, and B may be determined based on A. However, it should further be understood that determining B based on A does not mean that B is determined based on A only, that is, B may also be determined based on A and/or other information.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

A person of ordinary skill in the art may be aware that units, algorithms, and steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments of this application, "a plurality of' means two or more than two.

Descriptions such as "first", "second" in the embodiments of this application are merely used for indicating and distinguishing between described objects, do not show a sequence, do not indicate a specific limitation on a quantity of devices in the embodiments of this application, and do not constitute any limitation on the embodiments of this application.

In the embodiments of this application, "connection" means various connection manners such as a direct connection or an indirect connection, for implementing communication between devices. This is not limited in the embodiments of this application.

Unless otherwise specified, "transmission" (transmit/transmission) in the embodiments of this application refers to bidirectional transmission, and includes a sending action and/or a receiving action. Specifically, "transmission" in the embodiments of this application includes data sending, data receiving, or data sending and receiving. That is, data transmission herein includes uplink data transmission and/or downlink data transmission. Data may include a channel and/or a signal. Uplink data transmission is uplink channel transmission and/or uplink signal transmission, and downlink data transmission is downlink channel transmission and/or downlink signal transmission.

It may be understood that in the embodiments of this application, the terminal device and/or the network device may perform some or all steps in the embodiments of this application. These steps or operations are merely examples. In the embodiments of this application, other operations or variations of various operations may be further performed. In addition, the steps may be performed in a sequence different from that presented in the embodiments of this application, and not all operations in the embodiments of this application may need to be performed.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a terminal device, measurement configuration information from a network device, wherein the measurement configuration information indicates at least one measurement area, and each measurement area is associated with at least one to-be-measured target; and
measuring, by the terminal device in an idle state or a third state, the to-be-measured target based on a camped cell of the terminal device and the measurement configuration information.

2. The method according to claim 1, wherein the measurement configuration information indicates at least two measurement areas, and each measurement area is associated with one or more to-be-measured targets.

3. The method according to claim 1 or 2, wherein the measurement area comprises a long term evolution LTE cell and a new radio NR cell; and
the measuring, by the terminal device in an idle state or a third state, the to-be-measured target based on a camped cell of the terminal device and the measurement configuration information comprises:
when the camped cell of the terminal device belongs to the measurement area, retaining, by the terminal device, the measurement configuration information, and measuring, based on the measurement configuration information, the at least one to-be-measured target associated with the measurement area.

4. The method according to any one of claims 1 to 3, wherein the to-be-measured target comprises one or more to-be-measured frequencies.

5. The method according to any one of claims 1 to 3, wherein the to-be-measured target comprises one or more to-be-measured cells on one or more to-be-measured frequencies.

6. The method according to claim 4 or 5, wherein the to-be-measured frequency is an LTE frequency or an NR frequency.

7. The method according to any one of claims 1 to 6, wherein the measuring, by the terminal device in an idle state or a third state, the to-be-measured target based on a camped cell of the terminal device and the measurement configuration information comprises:
when the camped cell of the terminal device belongs to one or more measurement areas, measuring, by the terminal device, at least one to-be-measured target associated with the one or more measurement areas.

8. The method according to any one of claims 1 to 6, wherein the measuring, by the terminal device in an idle state or a third state, the to-be-measured target based on a camped cell of the terminal device and the measurement configuration information comprises:
when the camped cell of the terminal device does not belong to one or more measurement areas, measuring, by the terminal device based on the measurement configuration information, at least one to -be-measured target associated with a measurement area other than the one or more measurement areas.

9. A communication method, wherein the method comprises:
sending, by a network device, measurement configuration information to a terminal device, wherein the measurement configuration information indicates at least one measurement area, and each measurement area is associated with at least one to-be-measured target.

10. The method according to claim 9, wherein the measurement configuration information indicates at least two measurement areas, and each measurement area is associated with one or more to-be-measured targets.

11. The method according to claim 9 or 10, wherein the measurement area comprises a long term evolution LTE cell and a new radio NR cell; and the measurement area indicates that when a camped cell of the terminal device belongs to the measurement area, the measurement configuration information is retained, and the at least one to-be-measured target associated with the measurement area is measured based on the measurement configuration information.

12. The method according to any one of claims 9 to 11, wherein the to-be-measured target comprises one or more to-be-measured frequencies.

13. The method according to any one of claims 9 to 11, wherein the to-be-measured target comprises one or more to-be-measured cells on one or more to-be-measured frequencies.

14. The method according to claim 12 or 13, wherein the to-be-measured frequency is an LTE frequency or an NR frequency.

15. A communication method, wherein the method comprises:
receiving, by a terminal device, measurement configuration information from a network device, wherein the measurement configuration information comprises at least one to-be-measured target;
receiving, by the terminal device, at least one piece of indication information from the network device, wherein the at least one piece of indication information is separately used to indicate whether to measure the at least one to-be-measured target when the terminal device camps on a camped cell; and
measuring, by the terminal device in an idle state or a third state, the to-be-measured target based on the camped cell, the measurement configuration information, and the indication information.

16. The method according to claim 15, wherein the to-be-measured target comprises one or more to-be-measured frequencies.

17. The method according to claim 16, wherein the to-be-measured frequency is an LTE frequency or an NR frequency.

18. The method according to any one of claims 15 to 17, wherein the to-be-measured target comprises one or more to-be-measured cells on the to-be-measured frequency.

19. The method according to any one of claims 15 to 18, wherein the measurement configuration information comprises a first to-be-measured target and a second to-be-measured target, the first to-be-measured target comprises only an LTE frequency, and the second to-be-measured target comprises only an NR frequency; and
the measuring, by the terminal device in an idle state or a third state, the to-be-measured target based on the camped cell, the measurement configuration information, and the indication information comprises:
when the camped cell is a long term evolution LTE cell, determining, by the terminal device based on indication information associated with the first to-be-measured target, to measure the first measurement target in the LTE cell; and determining, based on indication information associated with a second measurement target, to measure the second measurement target in the LTE cell; or
when the camped cell is a new radio NR cell, determining, by the terminal device based on indication information associated with the first to-be-measured target, to measure the first measurement target in the NR cell; and determining, based on indication information associated with a second measurement target, to measure the second measurement target in the NR cell.

20. The method according to any one of claims 15 to 19, wherein the measurement configuration information comprises a first to-be-measured target and a second to-be-measured target, the first to-be-measured target comprises an LTE frequency and/or an NR frequency, and the second to-be-measured target comprises an LTE frequency and/or an NR frequency; and
the measuring, by the terminal device in an idle state or a third state, the to-be-measured target based on the camped cell, the measurement configuration information, and the indication information comprises:
when the camped cell is a long term evolution LTE cell, determining, by the terminal device based on indication information associated with the first to-be-measured target, to measure the first measurement target in the LTE cell; and
when the camped cell is a new radio NR cell, determining, by the terminal device based on indication information associated with a second measurement target, to measure the second measurement target in the NR cell.

21. A communication method, wherein the method comprises:
sending, by a network device, measurement configuration information to a terminal device, wherein the measurement configuration information comprises at least one to-be-measured target; and
sending, by the network device, at least one piece of indication information to the terminal device, wherein the at least one piece of indication information is separately used to indicate whether to measure the at least one to-be-measured target when the terminal device camps on a camped cell.

22. The method according to claim 21, wherein the to-be-measured target comprises one or more to-be-measured frequencies.

23. The method according to claim 22, wherein the to-be-measured frequency is an LTE frequency or an NR frequency.

24. The method according to any one of claims 21 to 23, wherein the to-be-measured target comprises one or more to-be-measured cells on the one or more to-be-measured frequencies.

25. A communication apparatus, comprising a unit configured to perform the method according to any one of claims 1 to 8 or claims 15 to 20.

26. A communication apparatus, comprising a unit configured to perform the method according to any one of claims 9 to 14 or claims 21 to 24.

27. A communication apparatus, comprising a processor and an interface circuit, wherein the interface circuit is configured to: receive a signal from a communication apparatus other than the communication apparatus, and transmit the signal to the processor or send a signal from the processor to a communication apparatus other than the communication apparatus; and the processor is configured to implement the method according to any one of claims 1 to 8 or 15 to 20 through a logic circuit or by executing code instructions.

28. A communication apparatus, comprising a processor and an interface circuit, wherein the interface circuit is configured to: receive a signal from a communication apparatus other than the communication apparatus, and transmit the signal to the processor or send a signal from the processor to a communication apparatus other than the communication apparatus; and the processor is configured to implement the method according to any one of claims 9 to 14 or 21 to 24 through a logic circuit or by executing code instructions.

29. A computer-readable storage medium, wherein the storage medium stores a program or instructions; and when the program or the instructions is or are run, the method according to any one of claims 1 to 8 or 15 to 20 is implemented.

30. A computer-readable storage medium, wherein the storage medium stores a program or instructions; and when the program or the instructions is or are run, the method according to any one of claims 9 to 14 or 21 to 24 is implemented.
